# EUROPÄISCHE PATENTSCHRIFT

(11) **EP 3 353 799 B1**
(45) Veröffentlichungstag und Bekanntmachung des Hinweises auf die Patenterteilung: **04.12.2019**
(21) Anmeldenummer: 16753360.3
(22) Anmeldetag: 17.08.2016
(51) Int. Cl.: H01F 38/14, H01F 3/08, H01F 41/02, H02J 7/02, H02J 7/00, H02J 50/10

(54) **INDUKTIONSSPULENEINHEIT MIT EINEM FASERVERSTÄRKTEN FERRITKERN**
INDUCTION COIL UNIT WITH FIBER REINFORCED FERRITE CORE
ENSEMBLE BOBINE D'INDUCTION AVEC NOYAU EN FERRITE RENFORCÉ PAR DES FIBRES

(30) Priorität: 24.09.2015 DE 102015218317
(43) Veröffentlichungstag der Anmeldung: 01.08.2018
(73) Patentinhaber: Bayerische Motoren Werke Aktiengesellschaft, 80809 München (DE)
(72) Erfinder: KRAMMER, Josef, 83607 Holzkirchen (DE); MÜLLER, Tobias, 84034 Landshut (DE); KÖNIG, Hartmut, 80339 München (DE); KEIL, Cornelius Johan Kalle, 38644 Goslar (DE); OPL, Stefan, 81379 München (DE)
(86) Internationale Anmeldenummer: PCT/EP2016/069458
(87) Internationale Veröffentlichungsnummer: WO 2017/050491

(56) Entgegenhaltungen:
- EP-A1- 2 620 960
- EP-A1- 2 824 793
- AT-B- 315 522
- DE-A1-102011 116 250
- DE-A1-102013 226 830
- US-A1- 2014 084 697

## Beschreibung

Die Erfindung betrifft eine Spuleneinheit gemäß dem Oberbegriff von Anspruch 1, ein Fahrzeug mit solch einer Spuleneinheit und ein Verfahren zu deren Herstellung.

Induktionsladesysteme dienen zum berührungslosen Laden eines elektrischen Energiespeichers eines Kraftfahrzeugs, wie beispielsweise eines Lithium-Ionen-Akkumulators. Zum Laden ist das Kraftfahrzeug, in dem eine sekundäre Induktionsspule angeordnet ist, über einen längeren Zeitraum über einer als Ladevorrichtung dienenden primären Induktionsspule zu platzieren, welche ein sich änderndes Magnetfeld emittiert.

Jede der DE 10 2011 116 250 A1, EP 2 824 793 A1, EP 2 620 960 A1 und DE 10 2013 226 830 A1 offenbart eine Spuleneinheit zur induktiven Energieübertragung gemäss Oberbegriff von Anspruch 1.

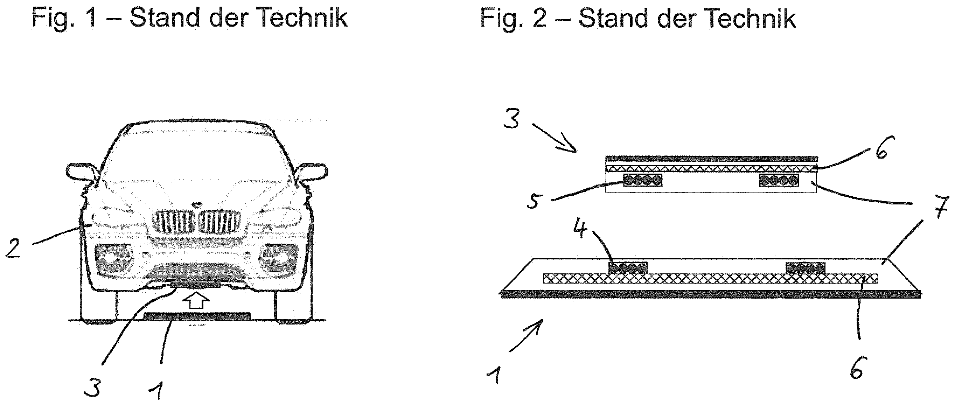

Fig. 1 zeigt beispielhaft eine am oder im Boden (z.B. Fahrbahn, Parkplatz, Garage) angeordnete primäre Spuleneinheit 1 und eine am Unterboden eines Fahrzeugs 2 angeordnete sekundäre Spuleneinheit 3. Zwischen der primären und sekundären Spuleneinheit ist ein Luftspalt vorhanden. Der Luftspalt sollte einerseits möglichst klein sein, um einen hohen Wirkungsgrad des Induktionsladesystems zu erreichen und andererseits groß sein, um kein Hindernis für das Fahrzeug 2 darzustellen oder um nicht beim Überfahren durch das Fahrzeug 2 beschädigt zu werden.
Fig. 2 zeigt das Induktionsladesystem aus Fig. 1 etwas detaillierter. In der primären Spuleneinheit 1 und der sekundären Spuleneinheit 3 sind entsprechend eine primäre Induktionsspule 4 und eine sekundäre Induktionsspule 5 vorgesehen, die jeweils um eine Hochachse gewickelt und in Vertikalrichtung möglichst flach ausgebildet sind, so dass sich die Spulenwicklungen in der Horizontalen erstrecken. Die primäre Induktionsspule 4 ist im Wesentlichen gleich zur sekundären Induktionsspule 5 aufgebaut, jedoch vertikal gespiegelt, wobei die primäre Induktionsspule 4 typischerweise größer ist als die sekundäre Induktionsspule 5. Zum Führen der Magnetfeldlinien sind Ferritkerne 6 vorgesehen. Für den Schutz der primären und sekundären Induktionsspule 4, 5 sind die Spulen jeweils in einer Vergussmasse 7 aus magnetisch neutralem Material eingebettet.

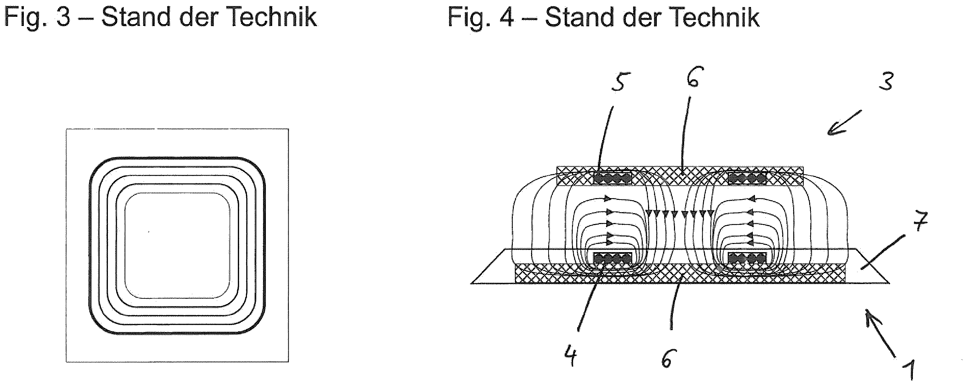

Fig. 3 zeigt eine geschnittene Draufsicht einer Induktionsspule, wie beispielsweise der primären Induktionsspule 4 oder der sekundären Induktionsspule 5. Beispielsweise kann die Spule im Wesentlichen quadratisch oder rund gewickelt sein.
Fig. 4 zeigt einen Feldlinienverlauf im Betrieb des Induktionsladesystems. Die primäre Induktionsspule 4 erzeugt ein Magnetfeld dessen Magnetfeldlinien in Fig. 4 eingezeichnet sind. Einige der Feldlinien durchlaufen sowohl die primäre als auch die sekundäre Induktionsspule 4, 5, wohingegen andere Feldlinien nur die primäre Induktionsspule 4 durchlaufen. Der Anteil, der nur die primäre Induktionsspule 4 durchlaufenden Feldlinien ist für einen guten Wirkungsgrad möglichst gering zu halten. Dies wird beispielsweise durch Gestaltung der die Feldlinien führenden Ferritkerne 6 erreicht.

Der Ferritkern 6 bildet einen wichtigen Bestandteil der jeweiligen Spuleneinheit 1, 3, der die Induktivität der Induktionsspule 4, 5 erhöht und/oder das magnetische Feld fokussiert/führt. Ferrit ist ein elektrisch schlecht bzw. nicht leitender keramischer Werkstoff. Ähnlich zu herkömmlichen Keramiken gelten Ferrite aufgrund ihrer spröden Struktur als bruchgefährdet. Der Herstellungsprozess basiert meist auf Sinterprozessen, wodurch lediglich einfache Formen realisiert werden können. Zur Generierung von komplexen Endkonturen sind die einfachen Geometrien entsprechend aneinander zu reihen, beispielsweise ergeben zwei im rechten Winkel angeordnete Platten ein rechtwinkliges Bauteil.

Nachteilig ist bei diesem Stand der Technik, dass die Herstellung von komplexen Ferritkerngeometrien nicht möglich ist. Durch die Sprödbrucheigenschaften des Werkstoffes besteht die Gefahr von Rissen oder Brüchen. Solche Risse verschlechtern wiederum die induktiven und magnetischen Eigenschaften der Spuleneinheit. Speziell bei Induktionsladesystemen sind die Induktionsspulen und damit die Ferritkerne verhältnismäßig großflächig und gleichzeitig sehr flach. Bei einer solchen Geometrie sind die Sprödbrucheigenschaften von Ferrit nachteilig.

Aufgabe der Erfindung ist es, eine Spuleneinheit zur induktiven Energieübertragung zu schaffen, die einen besseren Schutz vor mechanischen Beschädigungen bietet. Diese Aufgabe wird mit einer Spuleneinheit mit den Merkmalen des Patentanspruchs 1 und einem Verfahren mit den Merkmalen des Patentanspruchs 8 gelöst. Vorteilhafte Weiterbildungen sind Gegenstand der abhängigen Ansprüche.
Gemäß einem Ausführungsbeispiel der Erfindung wird eine Spuleneinheit zur induktiven Energieübertragung bereitgestellt, mit einer Induktionsspule und einem Ferritkern, der mit der Induktionsspule zusammenwirkt, wobei der Ferritkern aus einem faserverstärkten Keramikmaterial hergestellt ist. Dadurch kann ein einstückiger Ferritkern geschaffen werden, der sich durch eine hohe Stabilität auszeichnet. Die Vorteile eines solchen Ferritkerns liegen im Erhalt der magnetischen und induktiven Eigenschaften des Ferritkerns auch bei großen Belastungen. Ferner kann der Ferritkern hinsichtlich der Kräfteverteilung innerhalb einer tragenden Unterbodenstruktur des Fahrzeugs integriert werden. Außerdem könnten durch eine gesenkte Anzahl an Bauteilen, insbesondere bei komplexen 3D-Strukturen, die Herstellungskosten gesenkt werden. Aufgrund der optimierten Form des Ferritkerns ist ein verbessertes Systemverhalten zu erwarten, d.h. ein höherer Wirkungsgrad, eine höhere Leistung, usw. Darüber hinaus erhöht die Robustheit des Ferritkerns die Lebensdauer. Durch die angepasste Form kann außerdem eine Gewichts- und Bauraumreduktion erreicht werden.

Gemäß einem weiteren Ausführungsbeispiel der Erfindung sind die Fasern im faserverstärkten Keramikmaterial elektrisch nicht-leitfähig oder gegeneinander isoliert.

Gemäß einem weiteren Ausführungsbeispiel der Erfindung sind die Fasern im faserverstärkten Keramikmaterial Kohlenstofffasern.

Gemäß einem weiteren Ausführungsbeispiel der Erfindung sind die Fasern im faserverstärkten Keramikmaterial Glasfasern.

Gemäß einem weiteren Ausführungsbeispiel der Erfindung sind die Fasern im Keramikmaterial gleitfähig eingebettet.

Gemäß einem weiteren Ausführungsbeispiel der Erfindung sind die Fasern innerhalb eines Ferritkerns unidirektional ausgerichtet.

Darüber hinaus stellt die Erfindung ein Fahrzeug mit solch einer Spuleneinheit bereit.

Ferner stellt ein Ausführungsbeispiel der Erfindung ein Verfahren zum Herstellen einer Spuleneinheit zur induktiven Energieübertragung bereit, mit den Schritten: Sintern eines Ferritkerns, wobei während des Sintervorgangs Fasern in ein Keramikmaterial eingepresst werden; Bereitstellen einer Induktionsspule, und Fixieren der Induktionsspule relativ zum Ferritkern. Durch das erfindungsgemäße Verfahren können die vorstehend, im Zusammenhang mit der erfindungsgemäßen Vorrichtung genannten Vorteile erreicht werden.

Nachfolgend werden bevorzugte Ausführungsbeispiele der vorliegenden Erfindung unter Bezugnahme auf die beigefügten Zeichnungen beschrieben. In diesen Zeichnungen ist Folgendes dargestellt:
- Figur 1: zeigt ein Induktionsladesystem vom Stand der Technik;
- Figur 2: zeigt das Induktionsladesystem aus Fig. 1 mehr im Detail;
- Figur 3: zeigt eine geschnittene Draufsicht einer Induktionsspule des Induktionsladesystems aus Fig. 1;
- Figur 4: zeigt einen Feldlinienverlauf im Betrieb des Induktionsladesystems aus Fig. 1;
- Figur 5: zeigt ein Fahrzeug mit einem Induktionsladesystem mit einer erfindungsgemässen Spuleneinheit;
- Figur 6: zeigt ein erstes Ausführungsbeispiel einer Spuleneinheit des Induktionsladesystems aus Figur 5 mehr im Detail mit einer Detaildarstellung des Ferritkernaufbaus;
- Figur 7: zeigt ein zweites Ausführungsbeispiel einer Spuleneinheit des Induktionsladesystems aus Figur 5 mehr im Detail, und
- Figur 8: zeigt ein drittes Ausführungsbeispiel einer Spuleneinheit des Induktionsladesystems aus Figur 5 mehr im Detail.

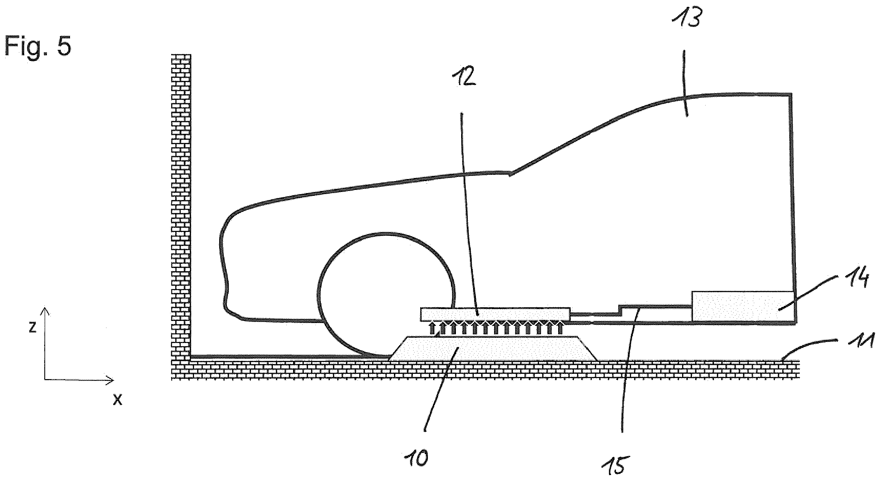

Figur 5 zeigt schematisch eine Ausführung eines Induktionsladesystem mit einer erfindungsgemässen Spuleneinheit.

Das Induktionsladesystem umfasst eine primäre Spuleneinheit 10, die in oder auf einem Boden 11 beispielsweise einer Fahrbahn, einem Parkplatz, einer Abstellfläche oder, wie in Fig. 5 angedeutet, einer Garage montiert ist. Die primäre Spuleneinheit 10 wirkt mit einer sekundären Spuleneinheit 12 zusammen, die an oder in einem Kraftfahrzeug 13 vorgesehen ist. Vorzugsweise ist die sekundäre Spuleneinheit 12 an einen Unterboden des Kraftfahrzeugs 13 montiert. Das Kraftfahrzeug 13 weist einen elektrischen Energiespeicher 14, vorzugsweise einen Hochvolt-Akkumulator, wie beispielsweise einen Lithium-Ionen-Akkumulator auf, der über eine elektrische Leitung 15 elektrisch mit der sekundären Spuleneinheit 12 verbunden ist und über diese induktiv aufgeladen werden kann. Zwischen der primären und der sekundären Spuleneinheit verbleibt ein Luftspalt. Zum Aufladen des Energiespeichers 14 emittiert die primäre Spuleneinheit 10 ein sich änderndes Magnetfeld. Durch Induktion entsteht dadurch in der sekundären Spuleneinheit 12 der zum Laden des Energiespeichers 14 erforderliche Ladestrom.

Nachfolgend wird beispielhaft der erfindungsgemäße Aufbau einer Spuleneinheit anhand einer sekundären Spuleneinheit beschrieben. Dies soll jedoch nur beispielhaft sein, denn der Erfindungsgedanke, insbesondere die Ausbildung des Ferritkerns, kann ebenfalls bei der primären Spuleneinheit angewendet werden, wenn auch der Vorteil einer stabileren Spuleneinheit bei der sekundären Spuleneinheit gewichtiger ist.

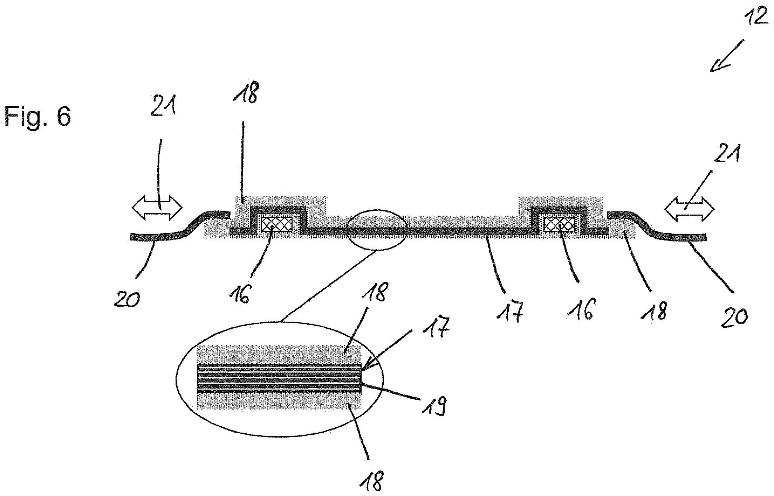

Figur 6 zeigt ein erstes Ausführungsbeispiel einer Spuleneinheit, insbesondere einer sekundären Spuleneinheit 12, des Induktionsladesystems aus Figur 5 mit einer Detaildarstellung des Ferritkernaufbaus. Die sekundäre Spuleneinheit 12 umfasst eine sekundäre Induktionsspule 16, deren Wicklungen um eine Hochachse (vorzugsweise parallel zu einer Fahrzeughochachse z, siehe Fig. 2) als Zentrum gewickelt sind. Die Wicklungen beschreiben dabei in einer Draufsicht im Wesentlichen eine quadratische oder runde Form, deren Mitte frei ist. Im Zentrum der sekundären Spuleneinheit 12 ist ein Ferritkern 17 angeordnet. Dieser wird zusammen mit der sekundären Induktionsspule 16 in einer Vergussmasse 18 aus magnetisch neutralem Material eingebettet. Der Ferritkern 17 verläuft innerhalb der Vergussmasse 18 auf der der primären Spuleneinheit 10 zugewandten Seite der sekundären Spuleneinheit 12, außer im Bereich der Wicklungen der sekundären Induktionsspule 16, die von dem Ferritkern 17 so umgeben werden, dass die der primären Spuleneinheit 10 zugewandte Seite der Wicklungen der sekundären Induktionsspule 16 frei bleibt. Der Ferritkern 17 ist demnach nicht flach oder plattenartig ausgebildet, sondern außerhalb der Spulenwicklungen flach und im Bereich der Spulenwicklungen ist eine Mulde ausgebildet, in der die Spulenwicklungen angeordnet sind, wobei die Mulde der Form der Spulenwicklungen entspricht. Der Ferritkern 17 ist vorzugsweise einstückig, d.h. ein zusammenhängendes nicht zerstörungsfrei trennbares Bauteil. Ermöglicht wird eine solche Formgebung dadurch, dass der Ferritkern 17 aus faserverstärkter Keramik hergestellt ist. In Fig. 6 zeigt ein Detailausschnitt die in das Keramikmaterial eingelegten Fasern 19 (als weiße Linien dargestellt und der Übersichtlichkeit halber ist nur eine Faser mit einem Bezugszeichen versehen). Hergestellt wird der Ferritkern 17 in einem einzigen Herstellungsverfahren, insbesondere einem Sinterverfahren. Während des Sinterverfahrens für den Ferritkern 17 werden die Fasern 19 in endkonturnaher Form in das Keramikmaterial gepresst. Ziel der eingebrachten Fasern ist es, bereits beim Sinterprozess entstandene Risse zu stabilisieren, wodurch eine Ausbreitung des Risses verhindert wird und die magnetischen und induktiven Eigenschaften des Ferritkerns 17 erhalten bleiben. Außerdem kann die Bruchfestigkeit gegen spätere mechanische Einwirkungen erhöht werden. Bei den Fasern handelt es sich vorzugsweise um Glasfasern oder Kohlenstofffasern. Glasfasern sind elektrisch nicht leitfähig und erzeugen daher keine Stromschleifen, die wiederum zu unerwünschten magnetischen Wirbelströmen führen könnten. Kohlenstofffasern sind elektrisch leitfähig und müssen daher gegenseitig isoliert werden. Entweder werden alle der Kohlenstofffasern des Ferritkerns 17 einzeln isoliert und/oder in Kohlenstofffaserbündel von nicht mehr als 0,1mm Durchmesser zusammengefasst und diese Bündel gegeneinander isoliert. Die Erfinder dieser Erfindung haben herausgefunden, dass sich bei Bündeln bis zu diesem Durchmesser oder einzelnen Kohlenstofffasern, die sich nicht berühren, keine magnetischen Wirbelströme ausbilden können, weil sich bei den leitfähigen Kohlenstofffasern keine Stromschleifen bilden können. Vorzugsweise sind die Kohlenstofffasern unidirektional ausgerichtet. Beispielsweise können alle Fasern innerhalb eines Ferritkerns 17 unidirektional ausgerichtet sein, d.h. die Längsrichtungen der Fasern verlaufen in die gleiche Richtung. Es ist außerdem möglich, die Fasern in mehreren Lagen anzuordnen, wobei die Fasern einer Lage unidirektional sind und sich die Längsrichtungen zweier benachbarter Lagen, beispielsweise im Winkel von 90°, schneiden. Durch zumindest die gegenseitige Isolation können sich keine Stromschleifen bilden. Die gegenseitige Isolation der Kohlenstofffasern bzw. Bündel kann beispielsweise durch Lackieren, Beschichten oder Ummanteln mit einem elektrisch nicht leitfähigen Material realisiert werden. Die Fasern sind so in das Keramikmaterial eingebettet, dass sie gegenüber dem Keramikmaterial gleitfähig sind. Bei der Ausrichtung der Fasern ist darauf zu achten, dass die Fasern möglichst senkrecht zu einer potentiellen Rissbildung im Keramikmaterial ausgerichtet werden. Diese potentielle Rissbildung kann anhand der zu erwartenden Kräfteeinwirkungen simuliert oder berechnet werden.

Die sekundäre Spuleneinheit 12 ist an einem Unterboden 20 des Kraftfahrzeugs 13 angeordnet und an diesem befestigt. Beispielsweise kann der Unterboden 20, wie dargestellt, im Bereich der sekundären Spuleneinheit 12 ausgespart und die sekundäre Spuleneinheit 12 im Unterboden 20 versenkt sein, so dass die sekundären Spuleneinheit 12 im Wesentlichen bündig zum Unterboden 20 auf der Fahrzeugunterseite verläuft. Aufgrund des erfindungsgemäßen, stabilen Ferritkerns 17 ist es somit möglich, dass die sekundären Spuleneinheit 12 einen Teil des Unterbodens bildet und Kräfte 21, insbesondere Zug-, Druck- & Biegebeanspruchung, aufnimmt. Um diese Funktion zu ermöglichen, ist die Vergussmasse 18 aus faserverstärktem Verbundmaterial, beispielsweise Glasfaserverbundmaterial.

Zum zusätzlichen Schutz kann die sekundären Spuleneinheit 12 von einer nicht dargestellten Gehäusestruktur umgeben und geschützt werden.

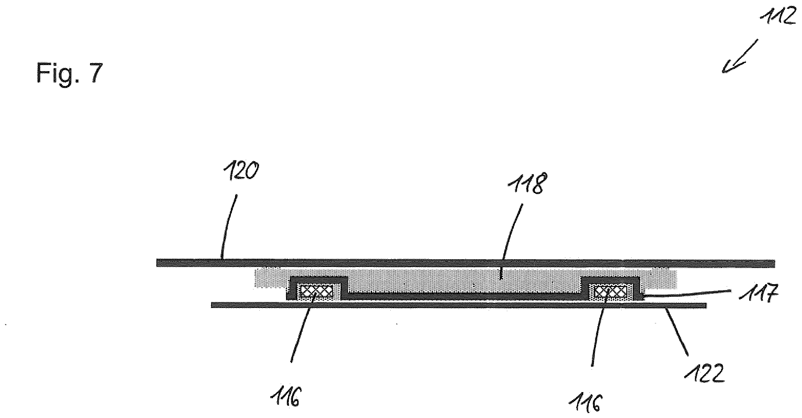

Figur 7 zeigt ein zweites Ausführungsbeispiel einer Spuleneinheit 112, insbesondere einer sekundären Spuleneinheit 112, des Induktionsladesystems aus Figur 5 mehr im Detail. Die sekundäre Spuleneinheit 112 umfasst eine sekundäre Induktionsspule 116, die der sekundären Induktionsspule 16 entspricht, und einen Ferritkern 117 der dem Ferritkern 17 entspricht. Im Unterschied zum vorherigen Ausführungsbeispiel ist die sekundäre Spuleneinheit 112 nicht im Unterboden des Kraftfahrzeugs 13 versenkt, sondern an einem Trägerelement 120 befestigt. Das Trägerelement 120 ist zur Aufnahme von Kräften dimensioniert und ausgelegt. Das Trägerelement 120 kann selbst der Unterboden des Kraftfahrzeugs 13 sein oder es kann ein zusätzliches am Unterboden zu befestigendes Bauteil sein, beispielsweise aus Aluminium. Die sekundäre Induktionsspule 116 und der Ferritkern 117 sind in eine Vergussmasse 118 aus magnetisch neutralem Material eingebettet. Da die Vergussmasse 118 in diesem Ausführungsbeispiel weniger Kräfte aufnehmen muss als im ersten Ausführungsbeispiel, kann sie weniger stabil ausgeführt werden, beispielsweise könnte auf eine Faserverstärkung verzichtet werden. Die geringere stabile Ausführung der Vergussmasse 118 wird durch eine zusätzliche Abdeckung 122 ausgeglichen, die Schutz vor mechanischer Beschädigung bietet. Die Abdeckung 122 kann als einfache Abdeckplatte oder in Form einer Gehäuseschale ausgeführt sein. Beispielsweise kann die Abdeckung 122 aus faserverstärktem Verbundmaterial, beispielsweise Glasfaserverbundmaterial ausgebildet sein.

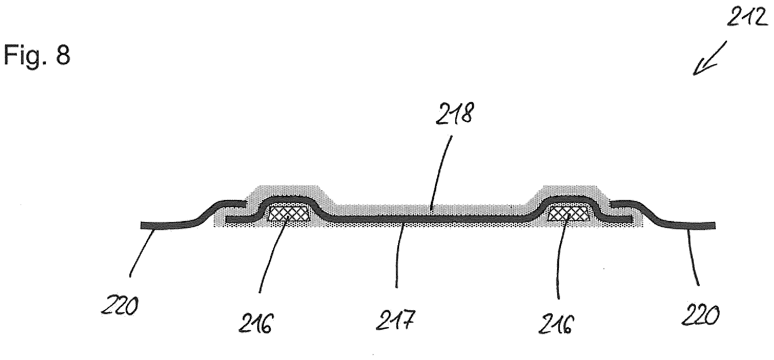

Figur 8 zeigt ein drittes Ausführungsbeispiel einer Spuleneinheit 212, insbesondere einer sekundären Spuleneinheit, des Induktionsladesystems aus Figur 5 mehr im Detail. Das dritte Ausführungsbeispiel entspricht Großteils dem ersten Ausführungsbeispiel. Daher werden, um Wiederholungen zu vermeiden, nur die Unterschiede zum ersten Ausführungsbeispiel beschrieben. Im Unterschied zum ersten Ausführungsbeispiel ist der Ferritkern 217 mit abgerundeten Ecken ausgebildet. Im Stand der Technik wurden komplexere, von ebenen Formen abweichende Formen durch Aneinanderreihen von mehreren kleineren Bauteilen realisiert. Da der Ferritkern 217 erfindungsgemäß einstückig ausgebildet werden kann, können beim Ausbilden von Ferritkernen diese auch weiche und besser angepasste Konturen mit Rundungen haben.

Während die Erfindung detailliert in den Zeichnungen und der vorangehenden Beschreibung veranschaulicht und beschrieben wurde, ist diese Veranschaulichung und Beschreibung als veranschaulichend oder beispielhaft und nicht als beschränkend zu verstehen und es ist nicht beabsichtigt die Erfindung auf die offenbarten Ausführungsbeispiele zu beschränken. Die bloße Tatsache, dass bestimmte Merkmale in verschiedenen abhängigen Ansprüchen genannt sind, soll nicht andeuten, dass eine Kombination dieser Merkmale nicht auch vorteilhaft genutzt werden könnte.

### Bezugszeichenliste:

- 1: Primäre Spuleneinheit
- 2: Fahrzeug
- 3: Sekundäre Spuleneinheit
- 4: Primäre Induktionsspule
- 5: Sekundäre Induktionsspule
- 6: Ferritkerne
- 7: Vergussmasse
- 10: Primäre Spuleneinheit
- 11: Boden
- 12: Sekundäre Spuleneinheit
- 13: Kraftfahrzeug
- 14: Elektrischer Energiespeicher
- 15: Elektrische Leitung
- 16: Sekundäre Induktionsspule
- 17: Ferritkern
- 18: Vergussmasse
- 19: Fasern
- 20: Unterboden
- 21: Kräfte
- 112: Spuleneinheit
- 116: Sekundäre Induktionsspule
- 117: Ferritkern
- 118: Vergussmasse
- 120: Trägerelement
- 122: Abdeckung
- 212: Spuleneinheit
- 216: Sekundäre Induktionsspule
- 217: Ferritkern
- 218: Vergussmasse
- 220: Unterboden

## Patentansprüche

1. Spuleneinheit (12; 112; 212) zur induktiven Energieübertragung, mit einer Induktionsspule (16; 116; 216) und einem Ferritkern (17; 117; 217), der mit der Induktionsspule zusammenwirkt,
**dadurch gekennzeichnet, dass**
der Ferritkern (17; 117; 217) aus einem faserverstärkten Keramikmaterial hergestellt ist.

2. Spuleneinheit (12; 112; 212) gemäß Anspruch 1, wobei die Fasern im faserverstärkten Keramikmaterial elektrisch nicht-leitfähig oder gegeneinander isoliert sind.

3. Spuleneinheit (12; 112; 212) gemäß einem der vorhergehenden Ansprüche, wobei die Fasern im faserverstärkten Keramikmaterial Kohlenstofffasern sind.

4. Spuleneinheit (12; 112; 212) gemäß einem der Ansprüche 1 bis 3, wobei die Fasern im faserverstärkten Keramikmaterial Glasfasern sind.

5. Spuleneinheit (12; 112; 212) gemäß einem der vorhergehenden Ansprüche, wobei die Fasern im Keramikmaterial gleitfähig eingebettet sind.

6. Spuleneinheit (12; 112; 212) gemäß einem der vorhergehenden Ansprüche, wobei die Fasern innerhalb des Ferritkerns (17; 117; 217) unidirektional ausgerichtet sind.

7. Fahrzeug (13) mit einer Spuleneinheit (12; 112; 212) gemäß einem der vorhergehenden Ansprüche.

8. Verfahren zum Herstellen einer Spuleneinheit (12; 112; 212) zur induktiven Energieübertragung, mit den Schritten:
Sintern eines Ferritkerns (17; 117; 217) aus einem Keramikmaterial, wobei während des Sintervorgangs Fasern in das Keramikmaterial eingepresst werden;
Bereitstellen einer Induktionsspule (16; 116; 216), und
Fixieren der Induktionsspule relativ zum Ferritkern.

9. Verfahren gemäß Anspruch 8, wobei die Fasern im faserverstärkten Keramikmaterial Kohlenstofffasern sind.

10. Verfahren gemäß Anspruch 8, wobei die Fasern im faserverstärkten Keramikmaterial Glasfasern sind.

## Claims

1. A coil unit (12; 112; 212) for inductive energy transfer, with
an induction coil (16; 116; 216) and a ferrite core (17; 117; 217) which cooperates with the induction coil,
**characterised in that**
the ferrite core (17; 117; 217) is produced from a fibre-reinforced ceramic material.

2. A coil unit (12; 112; 212) according to Claim 1, wherein the fibres in the fibre-reinforced ceramic material are electrically non-conductive or insulated from each other.

3. A coil unit (12; 112; 212) according to one of the preceding claims, wherein the fibres in the fibre-reinforced ceramic material are carbon fibres.

4. A coil unit (12; 112; 212) according to one of Claims 1 to 3, wherein the fibres in the fibre-reinforced ceramic material are glass fibres.

5. A coil unit (12; 112; 212) according to one of the preceding claims, wherein the fibres are embedded in slidable manner in the fibre-reinforced ceramic material.

6. A coil unit (12; 112; 212) according to one of the preceding claims, wherein the fibres within the ferrite core (17; 117; 217) are oriented unidirectionally.

7. A vehicle (13) with a coil unit (12; 112; 212) according to one of the preceding claims.

8. A method for producing a coil unit (12; 112; 212) for inductive energy transfer, having the steps:
sintering a ferrite core (17; 117; 217) from a ceramic material, wherein during the sintering operation fibres are pressed into the ceramic material;
providing an induction coil (16; 116; 216), and
fixing the induction coil relative to the ferrite core.

9. A method according to Claim 8, wherein the fibres in the fibre-reinforced ceramic material are carbon fibres.

10. A method according to Claim 8, wherein the fibres in the fibre-reinforced ceramic material are glass fibres.

## Revendications

1. Unité de bobine (12, 112, 212) permettant la transmission d'énergie par induction comprenant une bobine d'induction (16, 116, 216) et un noyau en ferrite (17, 117, 217) qui coopère avec la bobine d'induction, **caractérisée en ce que**
le noyau en ferrite (17, 117, 217) est réalisé en un matériau céramique renforcé par des fibres.

2. Unité de bobine (12, 112, 212) conforme à la revendication 1,
dans laquelle les fibres du matériau céramique renforcé par des fibres ne sont pas électriquement conductrices ou sont isolées les unes des autres.

3. Unité de bobine (12, 112, 212) conforme à l'une des revendications précédentes,
dans laquelle les fibres du matériau céramique renforcé par des fibres sont des fibres de carbone.

4. Unité de bobine (12, 112, 212) conforme à l'une des revendications 1 à 3,
dans laquelle les fibres du matériau céramique renforcé par des fibres sont des fibres de verre.

5. Unité de bobine (12, 112, 212) conforme à l'une des revendications précédentes,
dans laquelle les fibres du matériau céramique sont noyées en pouvant glisser.

6. Unité de bobine (12, 112, 212) conforme à l'une des revendications précédentes,
dans laquelle les fibres situées à la partie interne du noyau en ferrite (17, 117, 217) sont orientées de manière uni directionnelle.

7. Véhicule (13) comprenant une unité de bobine (12, 112, 212) conforme à l'une des revendications précédentes.

8. Procédé d'obtention d'une unité de bobine (12, 112, 212) permettant un transfert d'énergie par induction comprenant des étapes consistant à :
fritter un noyau en ferrite (17, 117, 217) à partir d'un matériau céramique, au cours du procédé de frittage les fibres du matériau céramique étant insérées par pressage,
se procurer une bobine d'induction (16, 116, 216), et
fixer la bobine d'induction au noyau en ferrite.

9. Procédé conforme à la revendication 8,
selon lequel les fibres du matériau céramique renforcé par les fibres sont des fibres de carbone.

10. Procédé conforme à la revendication 8,
selon lequel les fibres du matériau céramique renforcé par des fibres sont des fibres de verre.
